# EUROPEAN PATENT SPECIFICATION

(11) **EP 3 852 400 B1**
(45) Date of publication and mention of the grant of the patent: **24.07.2024**
(21) Application number: 21158973.4
(22) Date of filing: 31.07.2017
(51) Int. Cl.: H04W 4/12, H04L 67/12, H04W 4/40, H04W 88/04, H04W 8/22, H04W 84/18

(54) **METHOD, COMMUNICATION SYSTEM AND COMPUTER READABLE MEDIUM TO TRANSMIT MESSAGES BETWEEN A PLURALITIES OF USER EQUIPMENT**
VERFAHREN, KOMMUNIKATIONSSYSTEM UND COMPUTERLESBARES MEDIUM ZUM ÜBERTRAGEN VON NACHRICHTEN ZWISCHEN EINER VIELZAHL AN BENUTZERGERÄTEN
PROCÉDÉ, SYSTÈME DE COMMUNICATION ET SUPPORT LISIBLE PAR ORDINATEUR POUR TRANSMETTRE DES MESSAGES ENTRE UNE PLURALITÉ D'ÉQUIPEMENTS UTILISATEUR

(43) Date of publication of application: 21.07.2021
(62) Divisional of application: 17184002.8
(73) Proprietor: Nokia Technologies Oy, 02610 Espoo (FI)
(72) Inventor: NEGLE, Klaus, 81541 Munich (DE); SCHEIDL, Wolfgang, 81541 Munich (DE)
(74) Representative: Swindell & Pearson Limited

(56) References cited:
- WO-A1-2017/028030
- US-A1- 2014 243 039
- US-A1- 2016 295 624

## Description

### FIELD OF INVENTION

The present subject matter relates to a method to enable a well-integrated and smart cooperation for message distribution in a system comprising direct communication and relayed communication. More specifically this method apply to vehicle-to-vehicle (V2V) communication. Relayed vehicle-to-vehicle communication is also known as vehicle-to-infrastructure (V2X) communication. Direct vehicle-to-vehicle communication is also known as direct communication. More specifically the messages can be Cooperative Aware Messages (CAM).

### BACKGROUND

Vehicle-to-vehicle and vehicle-to-infrastructure communication can be enhanced by aggregation, evaluation or just low latency forwarding of data at centralized components, which enables the distribution of these data to a wider area than the normal vehicle-to-vehicle communication as specified by ETSI ITS / IEEE WAVE technology. This distribution is referred in the following as "relayed communication", which is done on edge computing using a "GeoService" application.

3GPP has been working on enhancing DSRC technology (ITS/WAVE) by enabling communication, via LTE, between vehicles (PC5 interface) and using the infrastructure (Uu interface for uplink, eMBMS broadcast for downlink).

V2X services rely on periodic status exchange and asynchronous notifications. The former is provided by Cooperative Aware Messages (CAM), the latter by Decentralized Environmental Notification Messages (DENM). These CAM messages are transmitted at a frequency from one message transmitted by second to ten messages transmitted by second. These messages can for example fulfill the existing ITS-G5 standard. Messages will be transferred directly to other V2X-UEs or forwarded to a central V2X-AS and further evaluated, processed or distributed with low latency to relevant cars in proximity.

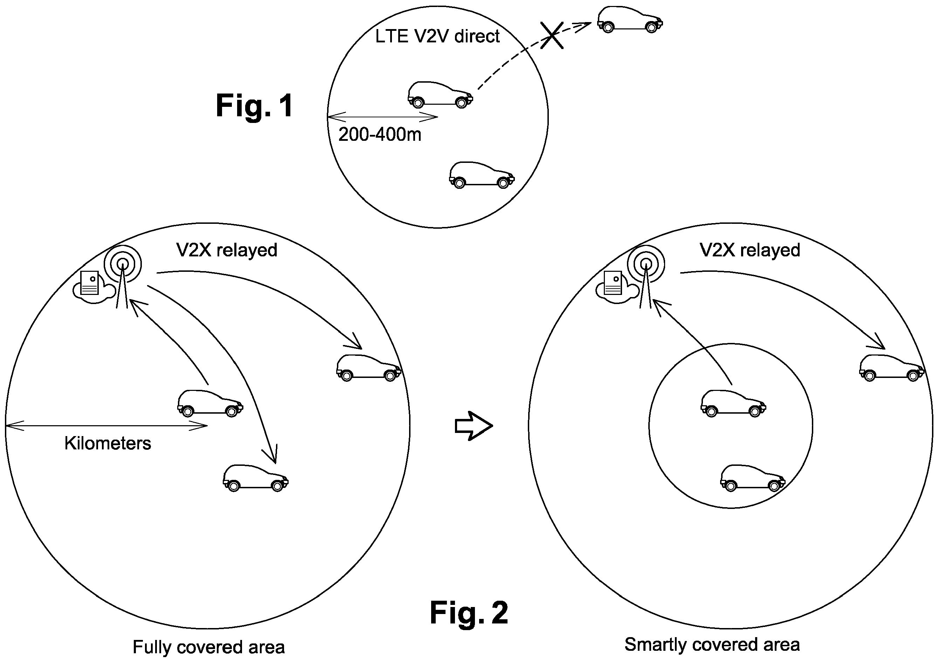

The figure 1 presents a direct communication system, for example between vehicles. The pro of this system is the availability of bandwidth to reach all cars in proximity to the sender.

The figure 2 presents a relayed communication system, for example between vehicles. The pros of this system are the possibility of extended to much larger defined area (e.g. electronic horizon) of extended the reachability "around the corner" and behind the horizon. This system has also the advantage of allowing the messages to be store and to be further used for example by applications located on the relay point. This system can use standard LTE communications. The cons of this system is the waste of capacity in the case of a large number of vehicles must receive the same message.

These different communication systems (direct communication, relayed communication) have pros and cons. Both ways deal with low latency communication. However there is no known technique of combining both communications systems to have the pros of both communication ways.

WO2017/028030 (D1) relates to a method for a wireless device to transmit a message, the wireless device being enabled to transmit the message to a wireless network via a first interface and to one or more other wireless device via a second interface, the method comprising: obtaining the message to be transmitted; determining whether the wireless device is within coverage of the wireless network; in response to determining that the wireless device is within coverage of the wireless network, transmitting the message to the wireless network via the first interface and transmitting the message to the one or more other wireless devices via the second interface; and in response to determining that the wireless device is not within coverage of the wireless network, transmitting the message to the one or more other wireless devices via the second interface.

US2016/295624 (D2) relates to a method of a first user equipment (UE) in a wireless vehicular communication network. According to D2, the method includes receiving a plurality of messages including control and data messages from at least one second UE using at least one of multiple resource pools, wherein the plurality of messages comprise event-triggered or periodic traffic and the multiple resource pools comprise at least one of dedicated or shared resource pools. According to D2, the method further includes determining the at least one of the multiple resource pools to transmit the plurality of messages to the at least one second UE, wherein multiple traffic types or priorities are multiplexed in the at least one of the multiple resource pools. According to D2, the method further includes dynamically adjusting resource selection of the first UE within the at least one of the multiple resource pools based on a state of the wireless vehicular communication network and directly communicating the plurality of messages to the at least one second UE using the at least one of the multiple resource pools.

US2014/243039 (D3) relates to a communication terminal device. According to D3, the communication terminal device may include a cellular wide area radio communication technology circuit. According to D3, the cellular wide area radio communication technology circuit may be configured to provide a communication according to a cellular wide area radio communication technology. According to D3, the communication terminal device may further include a circuit. According to D3, the circuit may be configured to provide a direct communication terminal device to communication terminal device communication bypassing a radio access network according to information received via the radio access network. According to D3, the communication terminal device may further include a message generator. According to D3, the message generator may be configured to generate a message to transmit to a base station. According to D3, the message may include at least one message field specifying information about at least one capability to provide the direct communication terminal device to communication terminal device communication of the communication terminal device. According to D3, the message may be generated for a network communication protocol.

### SUMMARY

This summary is provided to introduce concepts related to methods to enable a well-integrated and smart cooperation for message distribution in a system comprising direct communication and relayed communication.

According to various, but not necessarily all, embodiments there is provided user equipment, a communication system, a method and computer readable medium according to the appended claims.

In examples a method to transmit messages between a pluralities of user equipment, the method comprises, a step of receiving, by a relay and from a transmitting user equipment, a message and a notification data field, a step of determining, by the relay, a set of user equipment without direct communication capabilities with the transmitting user equipment and a step of transmitting, by the relay, the message to the set of user equipment.

In examples a communication system is described. This communication system comprises a relay, the relay comprising a radio module and being configured to receive, from a radio module of a transmitting vehicle, a message and a notification data field, this relay comprises at least one other module configured to determine a set of user equipment without direct communication capabilities with the transmitting user equipment, this relay being also configured to transmit the message to the set of user equipment.

In examples a computer-readable medium is described. This computer-readable medium has embodied thereon a computer program configured to realize a method to transmit messages between a pluralities of user equipment. The method comprises a step of receiving, by a relay and from a transmitting user equipment, a message and a notification data field, a step of determining, by the relay, a set of user equipment without direct communication capabilities with the transmitting user equipment, and a step of transmitting, by the relay, the message to the set of user equipment.

The scope of protection sought for various embodiments of the invention is set out by the independent claims. The embodiments and features, if any described in this specification that do not fall under the scope of the independent claims are to be interpreted as examples useful for understanding various embodiments of the invention.

### BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 presents direct communication system
Figure 2 presents relayed communication system
Figure 3 presents a first embodiment of the method of the present subject matter.
Figure 4 presents a second embodiment of the method of the present subject matter.
Figure 5 presents how the methods can combine the benefits of direct and relayed communications.
Figure 6 presents an implementation option of the present subject matter.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

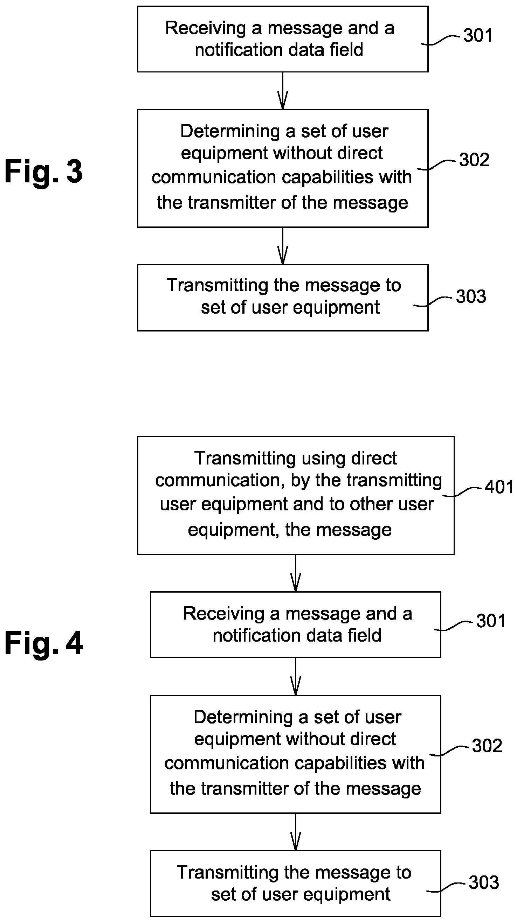

The figure 3 presents a first embodiment of the method of the present subject matter. This method allows the transmission of messages between a pluralities of user equipment. The method comprises:
- A step 301 of receiving, by a relay and from a transmitting user equipment, a message and a notification data field,
- A step 302 of determining, by the relay, a set of user equipment without direct communication capabilities with the transmitting user equipment,
- A step 303 of transmitting, by the relay, the message to the set of user equipment (the set of user equipment determined within the step 302).

Within the different embodiment the user equipment can be a vehicle with a radio module and different other modules configured to transmit and receive messages.

The figure 4 presents a second embodiment of the method to transmit messages. In this embodiment, and compared to the first embodiment the method also comprises:
- a step 401 of transmitting using direct communication, by the transmitting user equipment and to other user equipment, the message.

In an embodiment, the set of user equipment, without direct communication capabilities with the transmitting user equipment, comprise user equipment without direct communication capabilities.

In another embodiment, the set of user equipment, without direct communication capabilities with the transmitting user equipment, comprise user equipment located farther than of first threshold of the transmitting user equipment.

In another embodiment, the set of user equipment, without direct communication capabilities with the transmitting user equipment, comprise user equipment without direct communication capabilities and user equipment located farther than of first threshold of the transmitting user equipment.

In another embodiment the data notification field is incorporated within the message.

In another embodiment the relay comprises a data base populated with the user equipment with direct communication capabilities.

In another embodiment when the relay received a message with a data field notification, the relay will indicate, within the data base, that the transmitting user equipment has direct communication capabilities.

In another embodiment this data notification field can indicate that the transmitting user equipment doesn't want the message to be relayed by the relay. In this situation the relay will not retransmit the message but will indicate, within the data base, that the transmitting user equipment has direct communication capabilities.

Within the different embodiments of the method of this divulgation, direct communication is preferred. Relayed communication is used in situation direct communication is not possible any more (out of the range of the transmitter or receiver without direct communication possibilities). In order to do this the transmitter indicate, to the relay, the other user equipment having direct communication with the transmitter. And so the relay is aware user equipment for which the direct communication have already be done and so will not waste limited and precious capacity, bandwidth and spectrum of the relayed communication, by trying to transmit to these user equipment with direct communication.

As an example, a V2X-UE (e.g. car) will send CAM messages directly to all relevant cars in proximity, which have the direct communication capability, and will send the same CAM messages to the relay point, where these messages will be on a controlled way kept for specific use cases on the relay point or forwarded to cars only in the extended range or forwarded to the near range only to cars without direct communication capability.

In some embodiments the CAM messages include the current position, speed, heading etc of the sending car. This information is store in the relay point (GeoService application) in a so-called Geodatabase. Based on this information for each received CAM message / each sender (of CAM message to the relay point) it is very easy to calculate the distance of the current sender to all other surrounding vehicles (assuming that these surrounding vehicles have sent their position with their latest CAM messages).

In some embodiments we consider that the vehicles within a circle of radius 200m and center on the position of the transmitting vehicle are within a so called inner circle and can be reach using direct communication. Vehicles located between 200m and 2km of the transmitting vehicle are in a so called extended sector and can only be reach using relayed communication. So the vehicles within the inner circle will consist of the first set of user equipment having direct connection capabilities with the transmitting user equipment. The distances 200m and 2km are only example and can be in some embodiment configurable and/or in a real time manner in order to take into account modification of the environment.

In some embodiments the relay comprised a Multi-Access Edge Computing (MEC) located close to a base station. In some embodiments the relay is constituted of this MEC and the base station for example an LTE base station.

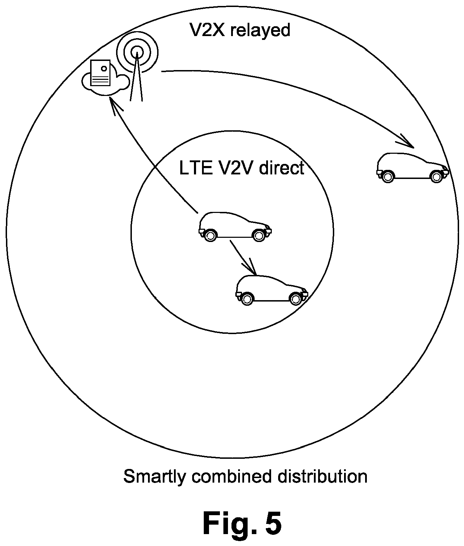

The figure 5 presents in another way how the above presented methods can combine the benefits of both communication ways (direct and relayed communications) and will reduce single and overall drawbacks of both communications ways. The different embodiments of this method enables therefore a well-integrated and smart cooperation for message distribution via relayed and direct communications.

Within the embodiments of the present subject matter and in order to combine in an optimized way, relayed and direct communications, the relay needs to know for each single message the awareness about already used direct communication path. This can be done very efficiently by adding a notification data field in the communication via relay. This field is set for each message in the client, which has exact knowledge, which messages were already sent out via direct communication.

This notification data field can be interpreted by the relay point very easily as:
- This message not to be forwarded to vehicles in near proximity (coverage of direct communication). In this case the relay will not to forward to vehicles within inner circle e.g. < 200m, but to forward to the extended circle/sector (e.g. between 200m and <2000m).
- The sender has the capability to receive messages via direct communication if the data notification field is set. If this data notification field is not set its means that the transmitting vehicle has not the capability of doing direct communication. In this case any further messages must be transmit by the relay to this vehicle even if this vehicle is within the inner circle.

Different options can be used to control the forwarding and distribution of the single message in a very efficient, specific and so capacity saving way.
option 1: Keep the message for specific use cases on the relay point, do not distribute further
option 2: Forward the message to cars only in the extended range
option 3: Forward the message also to the near range, but only to cars without direct communication capability.

An embodiment of the present subject matter is a vehicle. This vehicle comprises a radio module and at least one other module configured:
to transmit, to a relay, a message comprising a notification data field comprising at least an indication of the necessity of retransmit this message.

The present subject matter also comprises a communication system. This communication system comprises a relay having a radio module configured to receive, from a radio module of a transmitting user equipment, a message and a notification data field. This relay comprises at least one other module configured to determine a set of user equipment without direct communication capabilities with the transmitting user equipment. The relay being also configured to transmit the message to the set of user equipment.

The at least one module will be realized by one or more processors and one or more memory. The module may also be realized by the use of dedicated hardware as well as hardware capable of executing software in association with appropriate software. When provided by a processor, the modules may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

In other words, thanks to this communication system, direct-communication capable user equipment/vehicles send all messages via direct communication plus, for information, also to the relay point (also known as the relay). In this communication to the relay point, the new data field is provided and set. This data field is used in the relay point to control the re-distribution and in addition to detect and store the information for each single car, which has the direct-communication capability, assumed to be able and to have received the messages already via the direct communication. In some other embodiments of the present divulgation the rules and parameters for the distribution via relay point could be administered/configured on the relay point.

Regarding non-direct-communication capable user equipment/vehicles they will send all messages only to the relay point (without this data field or with this data field not set). In consequence, the relay point will distribute further these messages to all relevant user equipment/vehicles in proximity. The relay will also know that this transmitting user equipment/vehicle is not capable of direct-communication. This will be used latter on to determine a set of user equipment without direct communication capabilities with a given transmitting user equipment,

Introducing the new notification data field, plus the handling logic in the client and in the relay point, would allow to:
- reduce capacity consumption due to unnecessary message distribution (relayed communication)
- extend the range of direct communication by usage of relayed communication on top
- detect those cars which are capable to send/receive via direct communication

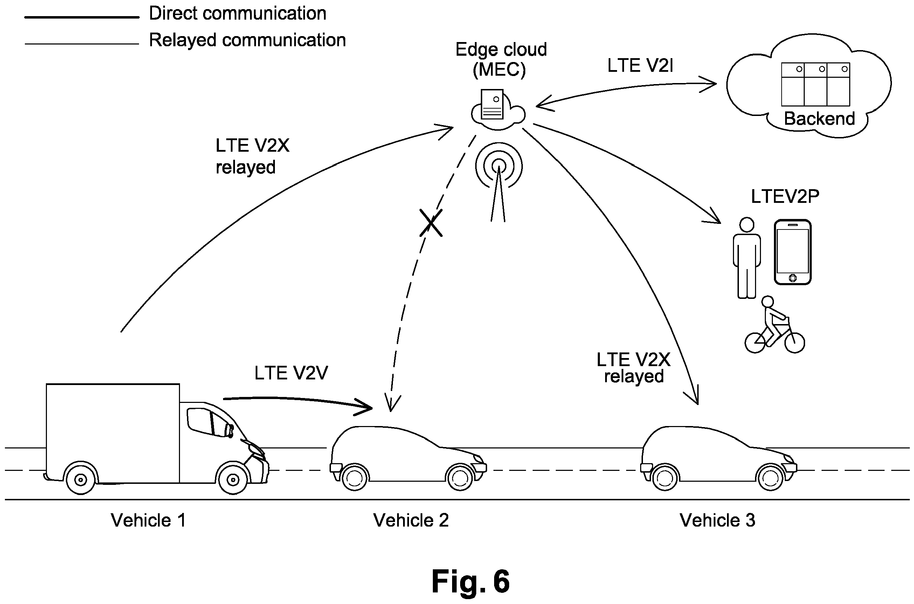

Figure 6 presents an implementation option of the present subject matter. Within this system, vehicle 1 and vehicle 2 are capable of sending/receiving messages via direct communication. The relay point already has the knowledge about all cars and their position and capabilities. Vehicle 1 sends its message a) directly to vehicle 2, and b) in addition to the relay point. The relay point detects that vehicle 2 is in the "inner circle" of vehicle 1 and must have received the message already directly. Hence the relayed message to vehicle 2 is not send (deleted line in the figure). The relay point forwards the message to vehicle 3 and others which are not in the direct range of vehicle 1. In case a vehicle which has no direct communication capability would be in the "inner circle" of vehicle 1 (not shown in the figure), the relay point would even forward the message to this vehicle since the relay point knows that the vehicle is not capable of receiving direct communication.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

## Claims

1. User equipment configured to:
transmit (401) a message to at least one other user equipment using direct communication;
transmit to a relay, the message and a notification data field, the message for transmission to a set of user equipment without direct communication capabilities with the user equipment **characterized in that** the notification data field is configured to indicate to the relay not to transmit the message to the at least one other user equipment having direct communication with the user equipment.

2. User equipment as claimed in claim 1, wherein the notification data field is incorporated within the message.

3. User equipment as claimed in claim 1 or 2, wherein the notification data field is configured to indicate that the user equipment has direct communication capabilities.

4. User equipment as claimed in any preceding claim, wherein the notification data field is configured to indicate the other user equipment to which the message is transmitted using direct communication.

5. User equipment as claimed in any preceding claim, wherein the notification data field comprises at least an indication of the necessity to retransmit the message.

6. User equipment as claimed in any preceding claim, wherein the message includes the current position, speed and/or heading of the user equipment.

7. A communication system comprising:
a user equipment as claimed in at least one of claim 1 to 6;
a relay; and
a set of other user equipment, wherein the relay is configured to:
receive (301), from the user equipment, a message and a notification data field;
determine (302) a set of user equipment without direct communication capabilities with the transmitting user equipment; and
transmit (303) the message to the determined set of user equipment.

8. A method comprising:
transmitting (401), by a user equipment, a message to at least one other user equipment using direct communication;
transmitting to a relay, the message and a notification data field, the message for transmission to a set of user equipment without direct communication capabilities with the user equipment **characterized in that** the notification data field is indicating to the relay not to transmit the message to the at least one other user equipment having direct communication with the user equipment.

9. A method as claimed in claim 8, wherein the notification data field is incorporated within the message.

10. A method as claimed in claim 8 or 9, wherein the notification data field is configured to indicate that the user equipment has direct communication capabilities.

11. A method as claimed in any of claims 8 to 10, wherein the notification data field is configured to indicate the other user equipment to which the message is transmitted using direct communication.

12. Computer-readable medium having embodied thereon a computer program configured to, when executed by one or more processors, realize a method comprising:
transmitting (401), by a user equipment, a message to at least one other user equipment using direct communication;
transmitting to a relay, the message and a notification data field, the message for transmission to a set of user equipment without direct communication capabilities with the user equipment **characterized in that** the notification data field is indicating to the relay not to transmit the message to the at least one other user equipment having direct communication with the user equipment.

13. A computer-readable medium as claimed in claim 12, wherein the notification data field is incorporated within the message.

14. A computer-readable medium as claimed in claim 12 or 13, wherein the notification data field is configured to indicate that the user equipment has direct communication capabilities.

15. A computer-readable medium as claimed in any of claims 12 to 14, wherein the notification data field is configured to indicate the other user equipment to which the message is transmitted using direct communication.

## Patentansprüche

1. Teilnehmereinrichtung, die zu Folgendem ausgelegt ist:
Übertragen (401) einer Nachricht zu mindestens einer anderen Teilnehmereinrichtung unter Verwendung einer direkten Kommunikation;
Übertragen der Nachricht und eines Benachrichtigungsdatenfeldes zu einem Relais, wobei die Nachricht für eine Übertragung zu einem Satz von Teilnehmereinrichtungen ohne direkte Kommunikationsfähigkeiten mit der Teilnehmereinrichtung vorgesehen ist,
**dadurch gekennzeichnet, dass**
das Benachrichtigungsdatenfeld dazu ausgelegt ist, dem Relais anzuzeigen, die Nachricht nicht zu der mindestens einen anderen Teilnehmereinrichtung mit einer direkten Kommunikation mit der Teilnehmereinrichtung zu übertragen.

2. Teilnehmereinrichtung nach Anspruch 1, wobei das Benachrichtigungsdatenfeld in die Nachricht integriert ist.

3. Teilnehmereinrichtung nach Anspruch 1 oder 2, wobei das Benachrichtigungsdatenfeld dazu ausgelegt ist anzuzeigen, dass die Teilnehmereinrichtung direkte Kommunikationsfähigkeiten aufweist.

4. Teilnehmereinrichtung nach einem der vorhergehenden Ansprüche, wobei das Benachrichtigungsdatenfeld dazu ausgelegt ist, der anderen Teilnehmereinrichtung anzuzeigen, zu welcher die Nachricht unter Verwendung einer direkten Kommunikation übertragen wird.

5. Teilnehmereinrichtung nach einem der vorhergehenden Ansprüche, wobei das Benachrichtigungsdatenfeld mindestens eine Anzeige der Notwendigkeit der Neuübertragung der Nachricht umfasst.

6. Teilnehmereinrichtung nach einem der vorhergehenden Ansprüche, wobei die Nachricht die aktuelle Position, die aktuelle Geschwindigkeit und/oder den aktuellen Kurs der Teilnehmereinrichtung beinhaltet.

7. Kommunikationssystem, das Folgendes umfasst:
eine Teilnehmereinrichtung nach mindestens einem der Ansprüche 1 bis 6;
ein Relais und
einen Satz von anderen Teilnehmereinrichtungen, wobei das Relais zu Folgendem ausgelegt ist:
Empfangen (301) einer Nachricht und eines Benachrichtigungsdatenfeldes von der Teilnehmereinrichtung;
Bestimmen (302) eines Satzes von Teilnehmereinrichtungen ohne direkte Kommunikationsfähigkeiten mit der sendenden Teilnehmereinrichtung und
Übertragen (303) der Nachricht zum bestimmten Satz von Teilnehmereinrichtungen.

8. Verfahren, das Folgendes umfasst:
Übertragen (401) einer Nachricht durch eine Teilnehmereinrichtung zu mindestens einer anderen Teilnehmereinrichtung unter Verwendung einer direkten Kommunikation;
Übertragen der Nachricht und eines Benachrichtigungsdatenfeldes zu einem Relais, wobei die Nachricht für eine Übertragung zu einem Satz von Teilnehmereinrichtungen ohne direkte Kommunikationsfähigkeiten mit der Teilnehmereinrichtung vorgesehen ist,
**dadurch gekennzeichnet, dass**
das Benachrichtigungsdatenfeld dem Relais anzeigt, die Nachricht nicht zu der mindestens einen anderen Teilnehmereinrichtung mit einer direkten Kommunikation mit der Teilnehmereinrichtung zu übertragen.

9. Verfahren nach Anspruch 8, wobei das Benachrichtigungsdatenfeld in die Nachricht integriert ist.

10. Verfahren nach Anspruch 8 oder 9, wobei das Benachrichtigungsdatenfeld dazu ausgelegt ist anzuzeigen, dass die Teilnehmereinrichtung direkte Kommunikationsfähigkeiten aufweist.

11. Verfahren nach einem der Ansprüche 8 bis 10, wobei das Benachrichtigungsdatenfeld dazu ausgelegt ist, der anderen Teilnehmereinrichtung anzuzeigen, zu welcher die Nachricht unter Verwendung einer direkten Kommunikation übertragen wird.

12. Computerlesbares Medium, auf dem sich ein Computerprogramm befindet, das dazu ausgelegt ist, wenn es von einem oder mehreren Prozessoren ausgeführt wird, ein Verfahren zu realisieren, das Folgendes umfasst:
Übertragen (401) einer Nachricht durch eine Teilnehmereinrichtung zu mindestens einer anderen Teilnehmereinrichtung unter Verwendung einer direkten Kommunikation;
Übertragen der Nachricht und eines Benachrichtigungsdatenfeldes zu einem Relais, wobei die Nachricht für eine Übertragung zu einem Satz von Teilnehmereinrichtungen ohne direkte Kommunikationsfähigkeiten mit der Teilnehmereinrichtung vorgesehen ist,
**dadurch gekennzeichnet, dass**
das Benachrichtigungsdatenfeld dem Relais anzeigt, die Nachricht nicht zu der mindestens einen anderen Teilnehmereinrichtung mit einer direkten Kommunikation mit der Teilnehmereinrichtung zu übertragen.

13. Computerlesbares Medium nach Anspruch 12, wobei das Benachrichtigungsdatenfeld in die Nachricht integriert ist.

14. Computerlesbares Medium nach Anspruch 12 oder 13, wobei das Benachrichtigungsdatenfeld dazu ausgelegt ist anzuzeigen, dass die Teilnehmereinrichtung direkte Kommunikationsfähigkeiten aufweist.

15. Computerlesbares Medium nach einem der Ansprüche 12 bis 14, wobei das Benachrichtigungsdatenfeld dazu ausgelegt ist, der anderen Teilnehmereinrichtung anzuzeigen, zu welcher die Nachricht unter Verwendung einer direkten Kommunikation übertragen wird.

## Revendications

1. Équipement utilisateur configuré :
pour transmettre (401) un message à au moins un autre équipement utilisateur en utilisant une communication directe ;
pour transmettre à un relais le message et un champ de données de notification, le message devant être transmis à un ensemble d'équipements utilisateurs sans capacité de communication directe avec l'équipement utilisateur,
**caractérisé en ce que**
le champ de données de notification est configuré pour indiquer au relais de ne pas transmettre le message à l'au moins un autre équipement utilisateur ayant une communication directe avec l'équipement utilisateur.

2. Équipement utilisateur selon la revendication 1, dans lequel le champ de données de notification est incorporé dans le message.

3. Équipement utilisateur selon la revendication 1 ou 2, dans lequel le champ de données de notification est configuré pour indiquer que l'équipement utilisateur a une capacité de communication directe.

4. Équipement utilisateur selon l'une des revendications précédentes, dans lequel le champ de données de notification est configuré pour indiquer l'autre équipement utilisateur auquel le message est transmis en utilisant une communication directe.

5. Équipement utilisateur selon l'une des revendications précédentes, dans lequel le champ de données de notification comprend au moins une indication de la nécessité de retransmettre le message.

6. Équipement utilisateur selon l'une des revendications précédentes, dans lequel le message comporte la position, la vitesse et/ou le cap actuels de l'équipement utilisateur.

7. Système de communication comprenant :
un équipement utilisateur selon au moins l'une des revendications 1 à 6 ;
un relais ; et
un ensemble d'autres équipements utilisateurs, dans lequel le relais est configuré pour :
recevoir (301), en provenance de l'équipement utilisateur, un message et un champ de données de notification ;
déterminer (302) un ensemble d'équipements utilisateurs sans capacité de communication directe avec l'équipement utilisateur transmetteur ; et
transmettre (303) le message à l'ensemble d'équipements utilisateurs déterminé.

8. Procédé comprenant :
la transmission (401), par un équipement utilisateur, d'un message à au moins un autre équipement utilisateur en utilisant une communication directe ;
la transmission, à un relais, du message et d'un champ de données de notification, le message devant être transmis à un ensemble d'équipements utilisateurs sans capacité de communication directe avec l'équipement utilisateur,
**caractérisé en ce que**
le champ de données de notification indique au relais de ne pas transmettre le message à l'au moins un autre équipement utilisateur ayant une communication directe avec l'équipement utilisateur.

9. Procédé selon la revendication 8, dans lequel le champ de données de notification est incorporé dans le message.

10. Procédé selon la revendication 8 ou 9, dans lequel le champ de données de notification est configuré pour indiquer que l'équipement utilisateur a une capacité de communication directe.

11. Procédé selon l'une quelconque des revendications 8 à 10, dans lequel le champ de données de notification est configuré pour indiquer l'autre équipement utilisateur auquel le message est transmis en utilisant une communication directe.

12. Support lisible par ordinateur sur lequel est incorporé un programme informatique configuré pour, lorsqu'il est exécuté par un ou plusieurs processeurs, réaliser un procédé comprenant :
la transmission (401), par un équipement utilisateur, d'un message à au moins un autre équipement utilisateur en utilisant une communication directe ;
la transmission, à un relais, du message et d'un champ de données de notification, le message devant être transmis à un ensemble d'équipements utilisateurs sans capacité de communication directe avec l'équipement utilisateur,
**caractérisé en ce que**
le champ de données de notification indique au relais de ne pas transmettre le message à l'au moins un autre équipement utilisateur ayant une communication directe avec l'équipement utilisateur.

13. Support lisible par ordinateur selon la revendication 12, dans lequel le champ de données de notification est incorporé dans le message.

14. Support lisible par ordinateur selon la revendication 12 ou 13, dans lequel le champ de données de notification est configuré pour indiquer que l'équipement utilisateur a une capacité de communication directe.

15. Support lisible par ordinateur selon l'une quelconque des revendications 12 à 14, dans lequel le champ de données de notification est configuré pour indiquer l'autre équipement utilisateur auquel le message est transmis en utilisant une communication directe.
